# EUROPÄISCHE PATENTSCHRIFT

(11) **EP 2 380 690 B1**
(45) Veröffentlichungstag und Bekanntmachung des Hinweises auf die Patenterteilung: **09.04.2014**
(21) Anmeldenummer: 11002397.5
(22) Anmeldetag: 23.03.2011
(51) Int. Cl.: B23K 1/00, B23K 1/005, B23K 26/22, B23K 26/24, B23K 26/20, C04B 37/00, H01M 8/02

(54) **Verfahren zum Fügen von metallischen und/oder keramischen Werkstoffen mit Hilfe eines glaskeramischen Zusatzwerkstoffes und eines Laserstrahles ; Fügeverbindung zweier metallischen und/oder keramischen flächigen Bauteile**
Joining of metallic and/or ceramic materials with the help of a glass ceramic filler material and a laser beam ; Joint with two metallic and/or ceramic materials parts
Assemblage de pièces en matières métalliques et/ou céramiques à l'aide d'une matière première additionnelle vitrocéramique et d'un faisceau laser ; Joint avec deux pièces en matières métalliques et/ou céramiques

(30) Priorität: 26.04.2010 DE 102010018366
(43) Veröffentlichungstag der Anmeldung: 26.10.2011
(73) Patentinhaber: Forschungszentrum Jülich GmbH, 52425 Jülich (DE)
(72) Erfinder: Faidel,Dietrich, 52064 Aachen (DE); Behr, Wilfried, 53879 Euskrichen (DE); Reisgen, Uwe, 52249 Eschweiler (DE)

(56) Entgegenhaltungen:
- DE-A1- 19 918 672
- JP-A- 2000 141 029
- US-A1- 2002 079 296

## Beschreibung

Die Erfindung betrifft ein Verfahren zum Fügen von metallischen und/oder keramischen Werkstoffen mit Hilfe eines glaskeramischen Zusatzwerkstoffes, insbesondere unter Zuhilfenahme eines Lasers, und eine elektrisch leitinde Fügeverbindung gemäß dem Oberbegriff der Ansprüche 1 und 11 (siehe, z.B., DE 199 18 672 A).

### Stand der Technik

Unter dem Begriff Fügen wird eine Fertigungstechnik (DIN 8580ff) verstanden, die das dauerhafte Verbinden von mindestens zwei Bauteilen bewirkt. Durch das Fügen wird der Zusammenhalt zwischen den zuvor getrennten Werkstücken lokal an einer Fügestelle geschaffen und so eine Formänderung des neu entstandenen Teils herbeigeführt. Über die Wirkflächen der Verbindung werden die auftretenden Betriebskräfte übertragen.

Zum Fügen von metallischen Werkstoffen sind unterschiedliche Verfahren, wie beispielsweise das Löten oder Schweißen bekannt. Unter Löten wird in der Regel ein thermisches Verfahren zum stoffschlüssigen Fügen von Werkstoffen verstanden, wobei eine flüssige Phase durch Schmelzen eines Lotes (Schmelzlöten) oder durch Diffusion an den Grenzflächen (Diffusionslöten) entsteht. Die Liquidustemperatur der Grundwerkstoffe wird dabei nicht erreicht.

Im Gegensatz dazu wird diese Temperatur beim Schweißen überschritten. Unter Schweißen versteht man (gemäß EN 14610 und DIN 1910-100) das unlösbare Verbinden von Bauteilen unter Anwendung von Wärme oder Druck, mit oder ohne Schweißzusatzwerkstoffen. Dabei werden beim Schmelzschweißen die Grundwerkstoffe bis zur Verflüssigung erhitzt und so verbunden. Sowohl Löt- als auch Schweißverbindungen sind stoffschlüssige Verbindungen, das bedeutet, dass sich diese Verbindungen nur durch Zerstörung der Verbindungsmittel trennen lassen.

Bei der Herstellung einer Hochtemperatur-Brennstoffzelle (SOFC = Solid Oxide Fuel Cell) werden Fügeprozesse benötigt, die eine gasdichte und elektrisch isolierende Verbindung von Metallbauteilen ermöglichen, die auch bei hohen Temperaturen bis zu 950 °C standhalten.

In der Regel werden zur Erzielung größerer Leistungen mehrere, insbesondere bis zu 200 Einzelzellen zu einem so genannten Brennstoffzellenstapel zusammengebaut, das bedeutet, die Brennstoffeinzelzellen werden durch Fügeprozesse miteinander verbunden.

Zu den gebräuchlichsten Fügeverfahren gehört auch das Löten. Bei der Einteilung von Lötverfahren wird danach unterschieden, welcher Energieträger eingesetzt wird, beispielsweise durch elektrischen Strom oder durch eine elektrische Gasentladung.

Zudem spricht man je nach Liquidustemperatur des eingesetzten Lotes vom Weichlöten (bis 450 °C), vom Hartlöten (ab 450 °C) und über 900 °C vom Hochtemperaturlöten. Das Hochtemperaturlöten (HT-Löten) ist ein Lötverfahren, das überwiegend zum Fügen von thermisch und mechanisch hochbelasteten Bauteilen aus Edelstahl, Nickel- und Kobaltlegierungen sowie Keramiken verwendet wird. Das HT-Löten ist ein flussmittelfreies Lötverfahren welches bei Temperaturen von mehr als 900 °C stattfindet. Die Lötverbindungen werden vornehmlich in geschlossenen Vakuumöfen oder in Schutzgasöfen mit Wasserstoff- oder Argonatmosphäre hergestellt. Als Lotwerkstoffe kommen kupfer-, nickel-, silber- und kobalthaltige Lote zum Einsatz

Stand der Technik für die Herstellung von SOFC-Stapeln ist heute die Ofenlötung mit einem Glaslot. Dabei werden die Ebenen des SOFC-Stapels, auf die eine Kontur aus Glaslotpaste mit einem Dispenser aufgetragen wurde, aufeinander gestapelt und im Ofen bei Temperaturen zwischen 850 °C und 950 °C gefügt.

Glaslot ist ein Glas mit besonders niedriger Erweichungstemperatur (z. B. 400 °C), das in der Regel zum thermischen Verbinden oder Abdichten von Gegenständen aus Glas verwendet wird. Glaslote eignen sich aber auch sehr gut zum Verbinden von metallischen Bauteilen. So werden derzeit schon verschiedene Glaslote zum Fügen von SOFC-Bauteilen eingesetzt. Die Betriebstemperaturen von Hochtemperatur-Brennstoffzellen liegen in der Regel im Bereich von 700 bis 1000 °C. Daher sollte das einzusetzende Dichtungsmaterial maßgeschneidert sein, um einerseits an den thermischen Ausdehnungskoeffizienten der beteiligten Bauteile angepasst zu sein, andererseits aber auch eine hermetische Dichtung im Temperaturbereich von 200 bis 1200 °C sicherzustellen. Chemische Wechselwirkungen mit den weiteren Brennstoffzellenbauteilen sollten ebenfalls ausgeschlossen sein. In Bezug auf die Langzeitstabilität solcher Dichtungen werden Standzeiten von mehr als 40.000 Betriebsstunden bei Betriebstemperatur angestrebt.

Entsprechend ihres Verhaltens während des Lötprozesses unterscheidet man stabile Glaslote und kristallisierende Glaslote. Stabile Glaslote verhalten sich wie herkömmliche Gläser. Während des Lötvorganges ändern sich ihre Eigenschaften nicht; bei erneutem Erhitzen der Lötstelle zeigt ihre Erweichung die gleiche Temperaturabhängigkeit wie beim vorhergegangenen Lötprozess.

Kristallisierende Glaslote, wie sie bei den Fügeverfahren einer SOFC eingesetzt werden, besitzen im Gegensatz zu stabilen Glasloten eine erhöhte Kristallisationsneigung. Während des Lötprozesses gehen sie in einen keramikartigen, polykristallinen Zustand über. Im Verlauf der Kristallisation steigt die Viskosität um mehrere Größenordnungen an, so dass weitere Fließvorgänge unterdrückt werden. Andererseits ermöglicht die Kristallisation eine stärkere thermische Wiederbelastung der Lötverbindung über das Temperaturgebiet des Lötvorganges hinaus.

Wenn nach dem Fügen eine Ebene eines Brennstoffzellenstapels undicht ist, ist regelmäßig der gesamte SOFC-Stapel unbrauchbar. Das eingesetzte Glaslot kristallisiert durch den Ofenprozess zu einer Glaskeramik. Zum Wiederaufschmelzen der Glaskeramik würde mehr Energie und somit eine höhere Temperatur benötigt, als beim Glaslot-Fügeprozess. Dabei könnten jedoch Bestandteile der SOFC beschädigt werden, so dass von einem Wiederaufschmelzen üblicherweise kein Gebrauch gemacht wird.

Ein Verfahren mit dem diese Problematik vorteilhaft umgangen werden kann, ist das Laser unterstütze Glaslotfügen. Im Bereich der Fertigung mit keramischen Bauteilen wird dieses Verfahren schon eingesetzt. Auch das Einzelpunktlöten mit einem Lotdraht ist bekannt. Der Einsatz eines Lasers ermöglicht eine exakte Fokussierung und damit das Löten von kleinsten Lötstellen. Die besonderen Vorteile dieses Verfahrens liegen auf der Hand:
- berührungslose Wärmeübertragung,
- exakte Fokussierung,
- hohe Leistungsdichte,
- hohe Qualität der Lötstellen bei hoher Prozess-Sicherheit.

Strahlquelle für das Laserlöten ist in der Regel ein Diodenlaser. Im Lasergenerator erfolgt die Strahlerzeugung und Strahlformung. Mit einer Optik wird der Laserstrahl exakt auf die Lötstelle fokussiert. Durch die Absorption der Wärmestrahlung entsteht die an der Lötstelle erforderliche Temperatur, deren Energie-Eintrag sich zudem sehr genau regeln lässt.

Beim Verbinden von zwei Metallbauteilen mit einem Glaslot müssen aber die unterschiedlichen Materialeigenschaften der eingesetzten Werkstoffe und dabei speziell der Wärmeausdehnungskoeffizient besonders beachtet werden.

### Aufgabe und Lösung

Der Erfindung liegt die Aufgabe zugrunde, ein effektives Verfahren zum stoffschlüssigen und gasdichten Fügen von metallischen und/oder keramischen Bauteilen mit Hilfe eines keramischen Zusatzwerkstoffes zur Verfügung zu stellen, insbesondere ein Verfahren zum punktuellen Verbinden der Bauteile.

Die Aufgaben der Erfindung werden gelöst durch ein Verfahren zum Laser unterstützten Fügen von metallischen und/oder keramischen Bauteilen gemäß Anspruch 1 und durch eine Fügeverbindung gemäß Anspruch 11. Vorteilhafte Ausgestaltungen des Verfahrens und der Fügeverbindung ergeben sich aus den jeweils darauf rückbezogenen Ansprüchen.

### Gegenstand der Erfindung

Im Rahmen der Erfindung wurde gefunden, dass sich ein Fügeverfahren zum Verbinden von wenigstens zwei metallischen und/oder keramischen flächigen Bauteilen wie folgt, vereinfachen lässt. Die zwei zu verbindenden Bauteile sind in der zur Verbindung vorgesehenen Anordnung in einem festen Abstand fixiert. Unter Zuhilfenahme eines Lasers wird in einem ersten Verfahrensschritt von außen zunächst eine Bohrung in das erste Bauteil gebohrt, ohne das zweite Bauteil zu beschädigen. Fügematerial wird der Prozesszone zugeführt und ebenfalls unter zu Hilfename des Lasers derart aufgeschmolzen, dass das flüssige Fügematerial durch die Bohrung zunächst auf die Oberfläche des zweiten Bauteils gelangt und dort durch die zwischen den Bauteilen vorhandene Kapillareinwirkung zwischen die zu verbindenden Bauteile gezogen wird und dort eine stoffschlüssige, gasdichte Verbindung ausbildet.

Bei den zu verbindenden Bauteilen kann es sich sowohl um Komponenten aus einem keramischen und/oder einem metallischen Material handeln. Als typische keramische Materialien sind beispielsweise zu nennen, die Oxide des Zirkonium und Aluminium, magnesiumhaltiger Forsterit (Mg₂SiO₄) und Stearit (3 MgO•4 SiO₄•H₂O), während als metallische Komponenten insbesondere Kohlenstoffstahl, Edelstahl oder Stahllegierungen in Frage kommen. Im Bereich der Hochtemperatur-Brennstoffzelle sind insbesondere Bauteile aus chromhaltigem ferritischem Stahl gegeneinander oder ein Stahlbauteil an eine Keramikplatte aus Yttriumstabilisiertem Zirkonoxid zu fügen. Typische SOFC-Kathoden umfassen beispielsweise Lanthan Strontium Kobalt Eisenoxide (LSF) (La_{0.60}Sr_{0.40}CO_{0.20}Fe_{0.80}O₃), oder auch Lanthan Strontium Manganoxide La_{0.85}Sr_{0.15}MnO₃, beide mit oder ohne Zusatz von mit Gadoliniun dotiertem Ceroxid (GDC).

Die Auswahl des geeigneten keramischen Fügematerials erfolgt, mit Rücksicht auf die Eigenschaften der zu verbindenden Werkstoffe, hauptsächlich unter folgenden Gesichtspunkten:
1. maximal zulässige Löttemperatur,
2. Wärmedehnung der zu verbindenden Werkstoffe,
3. maximale Anwendungstemperatur der Lötzone,
4. chemisches Verhalten.

Bei den Fügeverbindungen zwischen SOFC-Komponenten haben sich beispielsweise Glaslotverbindungen als Erfolg versprechend herausgestellt. Nicht kristallisierende Gläser scheiden bei Einsatztemperaturen, wie sie beispielsweise für Hochtemperatur-Brennstoffzelle verlangt werden, aus, da keine Gläser existieren, die sowohl eine Transformationstemperatur oberhalb von 700 °C als auch einen angestrebten Wärmeausdehnungskoeffizienten größer als 10 x 10⁻⁶ K⁻¹ aufweisen. Zudem würde ein solches Glas eine Fügetemperatur benötigen, die deutlich über der Belastungsgrenze der zu fügenden Komponenten liegt. Liegt aber die Betriebstemperatur des Hochtemperatur-Brennstoffzellenstapels deutlich oberhalb des Transformationsbereiches, sind die mechanischen, chemischen und elektrischen Eigenschaften nicht zu gewährleisten. Daher werden in der Regel für zu fügende Hochtemperaturwerkstoffe kristallisierende Glaslote als Fügematerial eingesetzt.

Typische Beispiele für solche Glaslote sind die in der Forschungszentrum Jülich GmbH entwickelten Barium-Calcium-Silikatgläser, die je nach Einsatzzweck mit weiteren Zusätzen wie z. B. Zinkoxid für langsamere Kristallisation versehen werden können.

Es hat sich jedoch herausgestellt, dass der in der Glaslotpaste enthaltene Binder bei der Einwirkung der Laserstrahlung mit offener Flamme verbrennt. Der bislang übliche Binder besteht in der Regel aus 95 % Terpineol und 5 % Ethylzellulose. Zwar kann durch geeignete Wahl von Verfahrensparametern ein Abbrennen verhindert werden, jedoch wird bei dem erfindungsgemäßen Verfahren bevorzugt ein Glaslot ohne weitere Binderzusätze eingesetzt.

Der bei dem erfindungsgemäßen Verfahren eingesetzt Laser sollte im Wellenlängenbereich zwischen 800 und 10600 nm arbeiten. Insbesondere dafür geeignet sind beispielsweise Festkörperlaser, wie ein Nd:YAG-Laser (kurz für Neodym-dotierter Yttrium-Aluminium-Granat-Laser, ist infrarote Strahlung mit der Wellenlänge 1064 nm) oder auch Gaslaser, wie beispielsweise ein Kohlendioxidlaser (oft auch als CO₂-Laser bezeichnet, elektrisch angeregter Gaslaser im mittleren Infrarot (MIR) Wellenlängenbereich, arbeitet bei 10,6 µm). Zunehmend finden auch der Faserlaser (Wellenlänge 1000 -1550 nm) und der Scheibenlaser (Wellenlänge 1030 nm) Anwendung bei der Materialbearbeitung, wo sie die bisher gebräuchlichen Typen (CO₂-Laser, lampengepumpte Nd:YAG-Laser) teilweise ersetzen können.

Bei dem erfindungsgemäßen Verfahren werden die Oberflächen der zu fügenden flächigen Bauteile zunächst korrekt zueinander positioniert, so dass während des Fügevorgangs selbst keine Relativbewegung zwischen den zu fügenden Bauteilen stattfindet. Mit Hilfe des Lasers wird nun eine durchgehende Bohrung in einem der beiden zu fügenden Bauteile erzeugt (erstes Bauteil). Dabei wird der Laserstrahl derart auf die Oberfläche des ersten Bauteils gerichtet und fokussiert, dass durch den Energieeintrag des Lasers in die Bauteiloberfläche diese aufschmilzt. Dabei ist zu beachten, dass der Fokus des Lasers exakt auf die Ebene der Bohrung des ersten Bauteils ausgerichtet ist, so dass beim Durchschmelzen des ersten Bauteils der Energieeintrag des Lasers regelmäßig nicht ausreicht, um auch die darunter liegende Oberfläche des zweiten Bauteils aufzuschmelzen. Dies wird insbesondere dadurch unterstützt, dass nach dem Durchschmelzen des ersten Bauteils der Laserfokus derart variiert wird, dass der Energieeintrag an der Stelle der Bohrung verringert wird. Der Energieeintrag sollte aber weiterhin so hoch sein, dass er das Fügematerial während des Fügeprozesses aufschmelzen und in der flüssigen Phase halten kann.

Der Energieeintrag an einer bestimmten Stelle kann während des Fügeverfahrens vorteilhaft durch eine Fokussierung, bzw. eine Defokussierung des Lasers variiert werden. In der Regel wird zum Aufbohren des ersten keramischen oder metallischen Bauteils eine höhere Energiedichte benötigt, so dass in diesem Verfahrensschritt der Laser in der Regel in der Ebene der Bohrung des ersten Bauteils fokussiert wird, so dass die Bohrung in kurzer Zeit entsteht.

Besondere Vorteile bietet das erfindungsgemäße Verfahren, wenn das erste Bauteil in Form eines dünnen Blechs oder einer dünnen Schicht vorliegt. Je dicker das erste Bauteil an der Stelle der Bohrung ist, desto mehr Material muss mit Hilfe des Lasers dazu aufgeschmolzen werden. Wenn zuviel Material des Bauteils aufgeschmolzen werden muss, bevor es zu einem Durchbruch kommt, kann sich nachteilig ein Rand aus dem aufgeschmolzenen Material des Bauteils um die Bohrung ansammeln. Dies könnte dann im Weiteren dazu führen, dass das seitlich zugeführte Fügematerial nach dem Aufschmelzen nicht über diese Barriere aus geschmolzenem Bauteilmaterial gelangen kann und somit auch nicht durch die Bohrung zum unteren Bauteil gelangt. Daher sollte die Schichtdicke des ersten Bauteils an der Stelle der Bohrung maximal 5 mm aufweisen, vorteilhaft jedoch nicht mehr als 3 mm, wobei bei dem Einsatz von ultra kurz gepulsten Sublimationslaser (Ultrakurzpuls-Laser) keine konkrete obere Grenze angegeben werden kann.

Ein weiteres Problem, welches in den Fällen auftreten kann , bei denen viel aufgeschmolzenes Bauteilmaterial auftritt, ist, dass das geschmolzene Bauteilmaterial des ersten Bauteils nach dem Durchbruch der Bohrung ebenfalls durch diese auf das untere Bauteil gelangt, und zwar in einer Art und Weise, dass sich Schweißbrücken bilden. Es könnte somit zu einer direkten Verbindung der Bauteilmaterialien kommen. Um dies regelmäßig zu verhindern, sollte die Schichtdicke des ersten Bauteils an der Stelle der Bohrung wie schon vorher genannt maximal 5 mm aufweisen und der Abstand zwischen den Bauteilen nicht zu gering gewählt werden. Zudem könnte gegebenenfalls, unter Einsatz eines zusätzlichen Ultrakurzpuls-Lasers, das überschüssige Material des ersten Bauteils verdampft werden.

Zum Aufschmelzen und Flüssighalten des zugeführten Fügematerials ist üblicherweise ein geringerer Energieeintrag notwendig, so dass für diesen Prozessschritt der Laser in der Regel in Relation zum aufzuschmelzenden Material defokussiert wird.

Das Fokussieren, bzw. Defokussieren kann dabei auf unterschiedliche Weise realisiert werden. In einer Ausführungsform des Verfahrens wird durch Relativbewegung zwischen dem ersten Bauteil und dem Laser der Abstand vergrößert, bzw. verkleinert, wodurch sich gleichzeitig der Fokus des Lasers mehr oder weniger aus der Ebene der Bohrung bewegt.

Alternativ kann aber auch eine Fokussierung bzw. Defokussierung auch über eine optische Einrichtung, z. B. mit Hilfe von Linsen und/oder Spiegeln erfolgen, ohne dass der Abstand zwischen dem Laser und dem ersten Bauteil verändert wird. Natürlich sind auch Kombinationen dieser beiden Alternativen möglich. Bei CO₂-Lasem wird in der Regel ein Spiegelsystem zur Fokussierung eingesetzt.

Nach erfolgter Laserbohrung, optional aber auch schon vorher oder während des Laserbohrens, kann Fügematerial an die Bohrstelle zugeführt werden. Im Falle von Glaslot als keramischem Fügematerial, erfolgt dies in der Regel in Form von Glaslotpulver. Es hat sich herausgestellt, dass Glaslotpulver anders als Metallpulver vorteilhaft über eine Vibrationseinheit gefördert und zugeführt werden kann. Neben einer punktförmigen Zuführung ist natürlich auch eine Zuführung über beispielsweise eine konzentrische Ringdüse denkbar.

Die Menge des zugeführten Fügematerials hängt unter anderem von den Parametern, Abstand der flächigen Bauteile an der Stelle der Bohrung, Bohrungsdurchmesser und Viskosität des aufgeschmolzenen Fügematerials, ab. Ein Fachmann ist in der Lage anhand der geometrischen Abmessungen der Bohrung und des Bauteilabstandes sowie der Materialeigenschaften des aufgeschmolzenen Fügematerials, anhand weniger Versuche, eine geeignete Menge an Fügematerial auszuwählen, um eine stoffschlüssige und gasdichte Verbindung herzustellen.

Der Bohrdurchmesser wird sich in der Regel an dem Laserdurchmesser orientieren. Ein typischer fokussierter Laserdurchmesser liegt in der Größenordnung zwischen 50 und 600 µm. Die durch den Laser bewirkte Bohrung ist auf Grund des Aufschmelzens immer etwas größer als der eigentliche Laserstrahldurchmesser, so dass hier in der Regel Bohrungen mit einem Durchmesser von 100 bis 1500 µm erzeugt werden.

Bei dem erfindungsgemäßen Verfahren wird das aufgeschmolzene Fügematerial über Kapillarkräfte in den Zwischenraum zwischen beiden Bauteilen gezogen. Daher ist es notwendig, dass ein zumindest minimaler Abstand von wenigstens 0,1 mm zwischen den Bauteilen an der Stelle der Bohrung vorliegt. Auf der anderen Seite sollte, um die Kapillarkräfte nutzen zu können, der Abstand zwischen den Bauteilen aber auch nicht größer als 5 mm gewählt werden. Je nach Material der Bauteile und des verwendeten Fügematerials, haben sich Abstände zwischen 0,1 und 2 mm als besonders gut geeignet herausgestellt.

In einer Abwandlung des erfindungsgemäßen Verfahrens wird zunächst Fügematerial auf die Oberfläche des ersten Bauteils an die für die Bohrung vorgesehene Stelle aufgebracht. Mit Hilfe eines defokussierten Lasers wird das Fügematerial aufgeschmolzen. Der Fokus des Lasers wird anschließend derart auf die Bohrung ausgerichtet, dass der Laserstrahl durch das aufgeschmolzene Fügematerial auf die Bauteiloberfläche reicht. Der Energieeintrag bewirkt nun hier das Aufschmelzen des Bauteilmaterials, so dass die gewünschte Bohrung entsteht, und das zuvor aufgeschmolzene Fügematerial gleich durch die Bohrung hindurch läuft.

Die Einstellung des Fokussierens und Defokussierens des Lasers kann dabei manuell erfolgen, wobei gegebenenfalls auch der Laser zwischendurch ausgeschaltet wird. Die Zeit, die benötigt wird, um die Bohrung durch das erste Bauteil zu bewirken, kann ebenfalls manuell eingestellt werden. Dazu sind möglicherweise einige Vorversuche notwenig, um je nach Materialstärke und Fokuseinstellung die für eine durchgehende Bohrung notwenige Zeit abzuschätzen.

Mittels geeigneter Prozesssensorik ist aber auch eine automatische Steuerung dieser Einstellungen und Zeitvorgaben denkbar, so dass gegebenenfalls der Laser während des gesamten Fügeprozesses kontinuierlich durchlaufen kann

Einer der Vorteile des erfindungsgemäßen Verfahrens besteht darin, dass bei flächigen Bauteilen das Fügematerial nicht zwischen den Bauteilen aufgebracht werden muss, sondern, dass das Fügematerial erst während des eigentlichen Fügeprozesses seitlich (von oben) zugeführt wird, bzw. optional vor dem eigentlichen Fügeprozess nur auf dem oberen (ersten) Bauteil aufgebracht wird.

Der eingesetzte Laser bewirkt sowohl die Bohrung selbst, als auch das Aufschmelzen des Fügematerials direkt an der zu fügenden Stelle. Mit diesem Verfahren können allerdings keine übereinanderliegenden Fügeverbindungen, wie im Fall der SOFC-Stapelfügung, hergestellt werden.

Das bislang vorgestellte Verfahren ist darüber hinaus insbesondere für punktförmige Verbindungen geeignet. Durch eine horizontale Relativbewegung zwischen den zu fügenden Bauteilen einerseits und der Laservorrichtung und der Zuführungseinheit für das Fügematerial anderseits, wird ein Fachmann aber durchaus auch in die Lage versetzt, mit einigen wenigen Abwandlungen mit diesem Verfahren auch lineare Fügeverbindungen herzustellen.

### Spezieller Beschreibungsteil

Im Folgenden werden einige Versuche vorgestellt, die die Erfindung näher erläutern sollen, ohne aber den Schutzbereich einzuschränken. Zudem werden die einzelnen Prozessschritte des erfindungsgemäßen Verfahrens schematisch dargestellt.

Es zeigen:

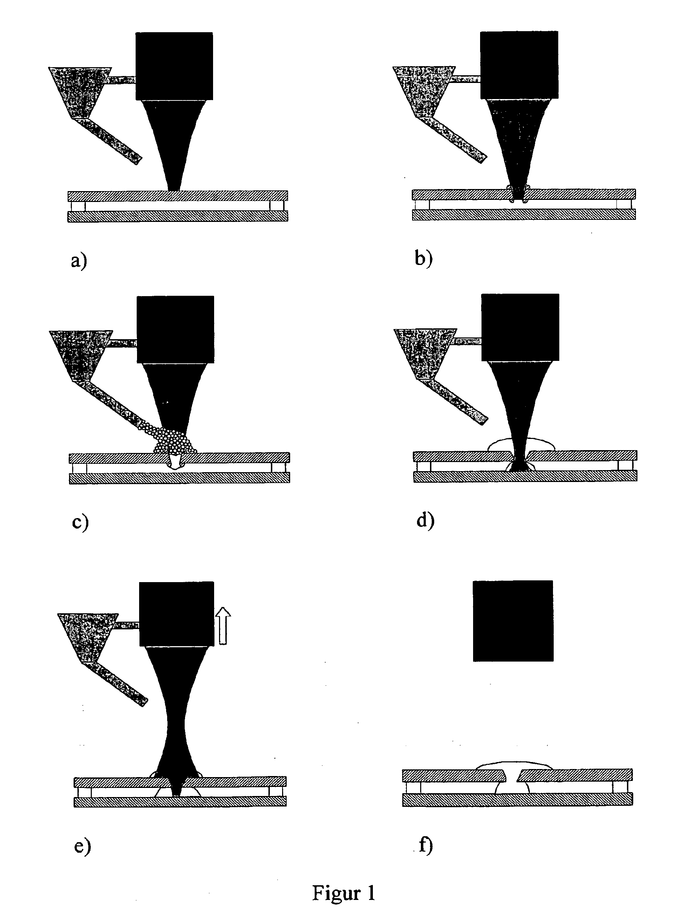

- Figur 1:: Schematische Darstellung der Verfahrensschritte des erfindungsgemäßen Verfahrens mit den Schritten: a) der Laserstrahl wird auf die Oberfläche des ersten Bauteils fokussiert, b) die Bohrung durch das erste Bauteil wird erzeugt, c) glaskeramischer Zusatzwerkstoff wird dem Bereich der Bohrung zugeführt, d) das Glaslot wird durch den Laserstrahl erwärmt, bzw. aufgeschmolzen, e) der Laserstrahl wird defokussiert und die beiden Bauteile durch die Bohrung fließendes, aufgeschmolzenes Fügematerial verbunden, f) der Laser wird abgeschaltet und die Fügeverbindung abgekühlt, wobei sich das Fügematerial nicht nur zwischen den Bauteilen, sondern auch an der Oberfläche des ersten Bauteils befindet.
- Figur 2:: Schematische Darstellung der Verfahrensschritte des erfindungsgemäßen Verfahrens mit optional zuvor aufgebrachtem Fügematerial: a) Erwärmung des Glaslotes, b) Aufschmelzen des Glaslotes, c) Bohren des ersten Bauteils, d) Verbindung beider Bauteile.
- Figur 3:: a) Oberseite des ersten Bauteils, b) Unterseite des ersten Bauteils.

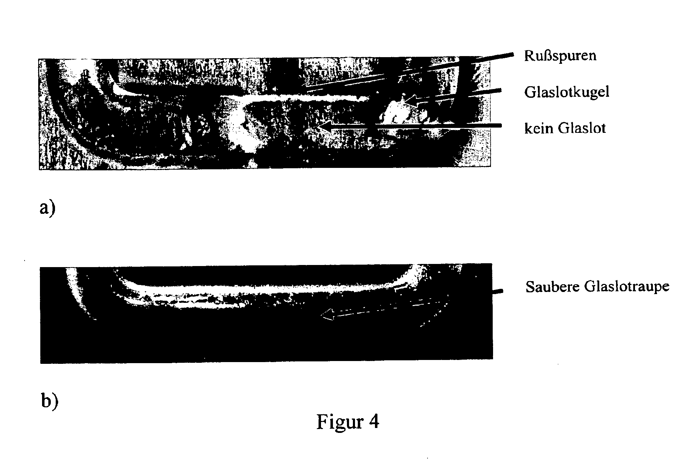

- Figur 4:: Mit unter unterschiedlichen Verfahrensparametern erzeugte Glaslotraupen a) P = 190 W, v = 1 mm/s, Glaslot 87, b) P = 100 W, v = 0,05 mm/s, Glaslot 87.

**Tabelle 1. eingesetzte Laserstrahlanlagen**

| Laserstrahlquelle | Wellenlänge [nm] | Leistung [W] | Freiheitsgrade | Betrieb |
|---|---|---|---|---|
| Nd:YAG | 1064 | 220 | 6 (Roboter) | gepulst |
| CO₂ | 10600 | 6000 | 5 (Roboter) | cw |
| Diode | 808 + 940 | 1000 | - (feststehend) | cw |

Untersucht wurden Glaslote, die in der Forschungszentrum Jülich GmbH speziell für die SOFC - Herstellung entwickelt wurden. Die Eigenschaften der Glaslote sind in der Tabelle 2 zusammengefasst.

**Tabelle 2. Glasloteigenschaften**

| Glaslot | BaO [wt-%] | CaO [wt-%] | SiO₂ [wt-%] | Ausdehnungskoeffizient bei 600°C [10⁻⁶K⁻¹] | Fügetemperatur [°C] |
|---|---|---|---|---|---|
| 48 | 36,72 | 15,84 | 46,81 | 11,9 | 950 |
| 84 | 34,5 | 14,87 | 43,95 | 10 | 850 |
| 87 | 48,21 | 6,05 | 29,75 | 9,5 | 820 |

Die Fügeversuche wurden mit Blechen aus Crofer 22 APU (Tabelle 3) durchgeführt. Diese Legierung wurde speziell für den Einsatz in der SOFC entwickelt und kann aufgrund ihres Ausdehnungskoeffizienten die Spannungsinduzierung während des Fügeprozesses minimieren. Die Blechdicken betrugen 0,3 mm, 0,5 mm, 1 mm, 2,5 mm.

**Tabelle 3. Eigenschaften von Crofer 22 APU bei 800 °C**

| Spez. Wärme [J/kg-K] | Wärmeleitfähig- keit [W/m.K] | El. Wider- stand [µΩ cm] | E-Modul [kN/mm²] | Ausdehnungs-Koeffizient [10⁻⁶/K] |
|---|---|---|---|---|
| 660 | 24 | 115 | 183 bei 500 °C | 11,9 |

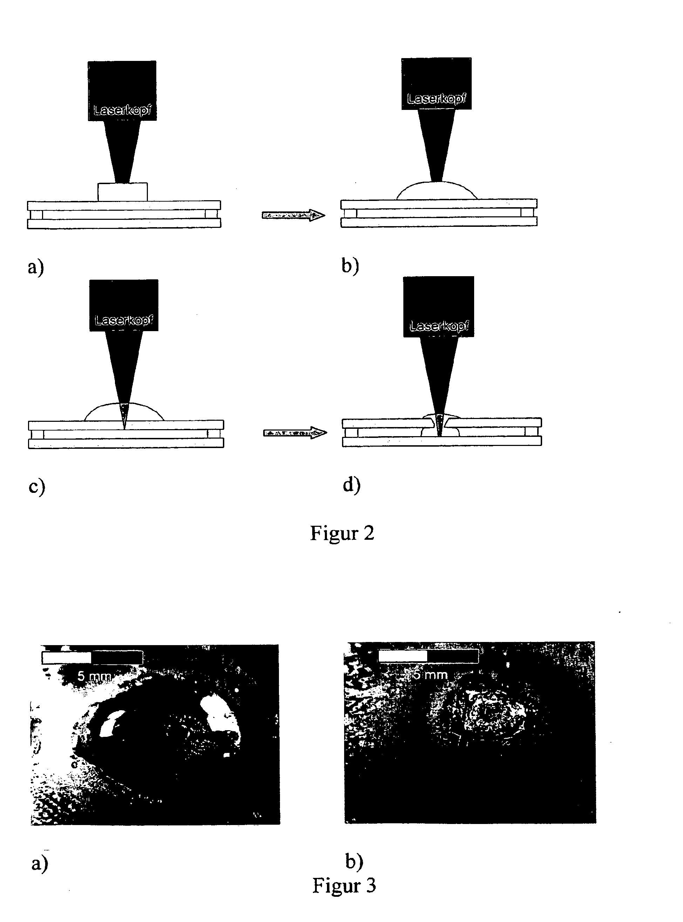

Die Versuche zeigten, dass bei dem Verfahren gemäß Figur 2 das obere Blech (erstes Bauteil) durch das flüssige Glaslot mit dem Laserstrahl gebohrt werden kann und das Glaslot durch die entstandene Bohrung zwischen beide Bleche fließt.

Es sollte jedoch Sorge getragen werden, dass nach der erfolgreichen Durchbohrung des ersten Bauteils, der Laser möglichst rasch defokussiert wird, so dass das zweite Bauteil durch die Lasereinstrahlung nicht , gemäß der Erfindung, in Mitleidenschaft gezogen wird.

Bei der direkten Einkopplung mit bislang üblichen Glasloten hat sich gezeigt, dass der in der Glaslotpaste enthaltene Binder bei der Einwirkung der Laserstrahlung regelmäßig mit offener Flamme verbrennt. Der Binder besteht in der Regel aus 95 % Terpineol (klare, farblose Flüssigkeit von hoher Viskosität, mit einem Siedepunkt von ca. 219 °C und einem Flammpunkt bei ca. 90 °C, in Wasser ist α-Terpineol nahezu unlöslich) und 5 % Ethylzellulose (ebenfalls eine leicht brennbare CH-Verbindung). Das Terpineol verdampft vor dem Fügen, die Ethylzellulose bleibt im Glaslot erhalten, kann beim schnellen Erhitzen jedoch nicht vollständig verdampfen und fängt an zu brennen.

Durch eine niedrige Verfahrgeschwindigkeit des Laserstrahls und die dadurch erzielbare hohe Streckenenergie, wird das Blech stärker erwärmt und der Binder kann durch die Wärmeleitung im Blech verdampfen, so dass eine saubere Glaslotraupe entsteht.

Vorteilhaft wird aber bei dem erfindungsgemäßen Verfahren auf den Einsatz von Binder im Zusatzwerkstoff verzichtet, da die gasförmige Ethylzellulose nicht schnell genug aus dem Glaslot entweichen kann und regelmäßig zu hoher Porosität in der Naht führen würde.

Um Erkenntnisse über die Struktur der gelöteten Proben zu erhalten, wurden REM - Untersuchungen durchgeführt. Die REM - Aufnahmen zeigten eine vollkommen andere Struktur der laserbearbeiteten Glaslote im Vergleich zu den Proben, die im Ofen gefügt wurden. Die lasergelöteten Proben weisen regelmäßig eine amorphe Struktur ohne jegliche Kristalle auf.

Dieser Unterschied ist besonders gut an Proben erkennbar, die im Ofen gefügt und getempert wurden und anschließend mit dem Laser erneut aufgeschmolzen wurden.

Die amorphe Struktur des Glaslotes entsteht durch die schnelle Abkühlung, so dass sich regelmäßig keine Kristalle ausbilden können. Im Gegenteil dazu, wird das Glaslot bei der Ofenfügung im Ofen getempert, um die thermischen Spannungen abzubauen.

Die Vorteile der amorphen Struktur der erfindungsgemäßen Glaslotverbindungen sind insbesondere, das Ausheilen von Mikrorissen bei hohen Temperaturen, die gute Benetzbarkeit der zu verbindenden Bauteilbleche sowie eine homogene Struktur ohne Risskeime.

## Patentansprüche

1. Fügeverfahren zum Verbinden von wenigstens zwei übereinander und beabstandet zueinander angeordneten metallischen und/oder keramischen flächigen Bauteilen, bei dem als Verbindungsbildner für die stoffschlüssige Verbindung ein glaskeramischer Zusatzwerkstoff eingesetzt wird, **dadurch gekennzeichnet,**
**dass** der Laserstrahl auf die Oberfläche des ersten Bauteils fokussiert wird,
- dass mit Hilfe eines fokussierten Lasers eine Bohrung in eines der zu verbindenden Bauteile erzeugt wird,
- **dass** der Bohrung der glaskeramische Zusatzwerkstoff zugeführt wird,
**dass** der Laserstrahl defokussiert wird,
- **dass** der glaskeramische Zusatzwerkstoff durch den Energieeintrags des defokussierten Lasers aufgeschmolzen wird, und
- dieser eine stoffschlüssige gasdichte und elektrisch isolierende Verbindung zwischen den zu fügenden Bauteilen bildet.

2. Fügeverfahren nach Anspruch 1, bei dem ein binderloses Glaslot als glaskeramischer Zusatzwerkstoff eingesetzt wird.

3. Fügeverfahren nach Anspruch 2, bei dem die Zuführung von pulverförmigem Glaslot seitlich über eine Vibrationseinheit erfolgt.

4. Fügeverfahren nach einem der Ansprüche 1 bis 3, bei dem ein CO₂-Laser, ein Nd:YAG-Laser, ein Faserlaser oder ein Scheibenlaser eingesetzt wird.

5. Fügeverfahren nach einem der Ansprüche 1 bis 4, bei dem die Fokussierung / Defokussierung des Lasers durch eine Relativbewegung des Lasers zu den zu fügenden Bauteilen oder durch eine optische Einrichtung erfolgt.

6. Fügeverfahren nach einem der Ansprüche 1 bis 5, bei dem die zu verbindenden Bauteile vor dem Fügen in einem Abstand von 0,1 bis 5 mm angeordnet sind, insbesondere in einem Anstand von 0,1 bis 2 mm.

7. Fügeverfahren nach einem der Ansprüche 1 bis 6, bei dem der Laser während des gesamten Fügeverfahrens kontinuierlich in Betrieb ist.

8. Fügeverfahren nach einem der Ansprüche 1 bis 7, bei dem eine punktförmige Fügeverbindung hergestellt wird.

9. Fügeverfahren nach einem der Ansprüche 1 bis 8, bei dem das erste Bauteil an der Stelle der Bohrung eine maximale Schichtdicke von 5 mm aufweist, insbesondere von maximal 1,5 mm.

10. Fügeverfahren nach einem der Ansprüche 1 bis 9, bei dem vor der Erzeugung der Bohrung in dem ersten Bauteil Fügematerial an die zu bohrende Stelle aufgebracht wird, das Fügematerial durch den Energieeintrag des Laser aufgeschmolzen wird, und der Laser die Bohrung des ersten Bauteils durch das aufgeschmolzene Fügematerial hindurch bewirkt, so dass schon während der Bohrung aufgeschmolzenes Fügematerial durch die Bohrung hindurch zwischen die zu fügenden Bauteile gelangt.

11. Elektrisch isolierende Fügeverbindung zweier übereinander und beabstandet zueinander angeordneten metallischen und/oder keramischen, flächigen Bauteile, mit einem glaskeramischen Zusatzwerkstoff als Verbindungsbildner für die stoffschlüssige Verbindung, herstellbar nach einem Verfahren gemäß einem der Ansprüche 1 bis 10, **dadurch gekennzeichnet,**
**dass** das erste Bauteil eine durchgehende Bohrung im Bereich der Fügeverbindung aufweist, und sich der glaskeramische Zusatzwerkstoff in der Bohrung und auf der Fügeverbindung abgewandten Oberfläche des ersten Bauteils, und nur zwischen den Bauteilen befindet, wobei das zweite Bauteil durch die Laserstrahlung nicht in Mitleidenschaft gezogen ist.

12. Fügeverbindung nach Anspruch 11, bei dem das erste Bauteil an der Stelle der Bohrung eine maximale Schichtdicke von 5 mm aufweist, insbesondere von maximal 1,5 mm.

13. Fügeverbindung nach einem der Ansprüche 11 bis 12, bei dem die zu verbindenden Bauteile im Bereich der Fügeverbindung einen Abstand von 0,1 bis 5 mm aufweisen, insbesondere einen Abstand von 0,1 bis 2 mm.

14. Fügeverbindung nach einem der Ansprüche 11 bis 12, mit einer durchgehenden Bohrung im Bereich der Fügeverbindung im ersten Bauteil, wobei die Bohrung einen Durchmesser zwischen 100 µm und 1500 µm aufweist.

## Claims

1. Joining process for connecting at least two metal and/or ceramic, flat components arranged on top of each other and at a distance from each other, in which a glass ceramic addition material is used to form the connection for the bonded connection, **characterised in that**
- the laser beam is focused on the surface of the first component,
- with the help of a focused laser a hole is produced in one of the components to be connected,
- the glass ceramic addition material is supplied to the hole,
- the laser beam is defocused,
- the glass ceramic addition material is melted by the energy input of the defocused laser, and
- this forms a bonded, gastight, electrically isolated connection between the components to be joined.

2. Joining process according to claim 1, in which a solder glass without binding agent is used as the glass ceramic addition material.

3. Joining process according to claim 2, in which the powdered solder glass is supplied at the side through a vibration unit.

4. Joining process according to one of claims 1 to 3, in which a CO₂ laser, an Nd:YAG laser, a fibre laser or a disc laser is used.

5. Joining process according to one of claims 1 to 4, in which the laser is focused / defocused by a relative movement of the laser to the components to be joined or by an optical device.

6. Joining process according to one of claims 1 to 5, in which the components to be connected are arranged at a distance of 0.1 to 5 mm from each other, particularly a distance of 0.1 to 2 mm, before they are joined.

7. Joining process according to one of claims 1 to 6, in which the laser is in continuous use during the whole joining process.

8. Joining process according to one of claims 1 to 7, in which a spot type joined connection is produced.

9. Joining process according to one of claims 1 to 8, in which the layer of the first component has a maximum thickness of 5 mm, particularly a maximum of 1.5 mm, in the area of the hole.

10. Joining process according to one of claims 1 to 9, in which joining material is applied to the place for the hole before the hole is produced in the first component, the joining material is melted by the energy input of the laser and the laser produces the hole in the first component through the melted joining material, so that melted joining material gets between the components to be joined through the hole even whilst the hole is being made.

11. Electrically isolated, joined connection of two metal and/or ceramic, flat components arranged on top of each other and at a distance from each other with a glass ceramic addition material to form the connection for the bonded connection, which may be produced according to a process according to one of claims 1 to 10, **characterised in that** the first component has a through hole in the area of the joined connection and there is glass ceramic addition material only between the components and in the hole and on the surface of the first component facing away from the joined connection and in which the second component is not affected by the laser beam.

12. Joined connection according to claim 11, in which the layer of the first component has a maximum thickness of 5 mm, particularly a maximum of 1.5 mm, in the area of the hole.

13. Joined connection according to one of claims 11 to 12, in which the components to be connected have a distance of 0.1 to 5 mm from each other, particularly a distance of 0.1 to 2 mm, in the area of the joined connection.

14. Joined connection according to one of claims 11 to 12, with a through hole in the area of the joined connection in the first component, in which the hole has a diameter of between 100 µm and 1500 µm.

## Revendications

1. Procédé d'assemblage servant à relier au moins deux pièces métalliques et/ou céramiques plates disposées l'une sur l'autre et à distance l'une de l'autre, dans le cadre duquel on utilise, en tant qu'agent de liaison pour la liaison par liaison de matière, un matériau supplémentaire en céramique de verre, **caractérisé en ce**
**que** le rayon laser est focalisé sur la surface de la première pièce,
**qu'**on réalise, à l'aide d'un laser focalisé, un alésage dans l'une des pièces devant être reliées,
**que** le matériau supplémentaire en céramique de verre est amené à l'alésage,
**que** le rayon laser est défocalisé,
**que** le matériau supplémentaire en céramique de verre est fondu par l'apport d'énergie du laser défocalisé, et
**que** celui-ci forme entre les pièces devant être assemblées une liaison par liaison de matière étanche au gaz et électriquement isolante.

2. Procédé d'assemblage selon la revendication 1, dans le cadre duquel on utilise en tant que matériau supplémentaire en céramique de verre un verre de soudure sans liant.

3. Procédé d'assemblage selon la revendication 2, dans le cadre duquel l'amenée de verre de soudure pulvérulent se fait sur le côté par l'intermédiaire d'une unité de vibration.

4. Procédé d'assemblage selon l'une quelconque des revendications 1 à 3, dans le cadre duquel on utilise un laser au CO₂, un laser Nd:YAG, un laser à fibre ou un laser à disque.

5. Procédé d'assemblage selon l'une quelconque des revendications 1 à 4, dans le cadre duquel la focalisation/la défocalisation du laser se fait grâce à un déplacement relatif du laser en direction des pièces devant être assemblées ou grâce à un dispositif optique.

6. Procédé d'assemblage selon l'une quelconque des revendications 1 à 5, dans le cadre duquel les pièces devant être reliées sont disposées, avant l'assemblage, à une distance allant de 0,1 à 5 mm, en particulier à une distance allant de 0,1 à 2 mm.

7. Procédé d'assemblage selon l'une quelconque des revendications 1 à 6, dans le cadre duquel le laser fonctionne en continu au cours de l'intégralité du procédé d'assemblage.

8. Procédé d'assemblage selon l'une quelconque des revendications 1 à 7, dans le cadre duquel on établit une liaison par assemblage ponctuelle.

9. Procédé d'assemblage selon l'une quelconque des revendications 1 à 8, dans le cadre duquel la première pièce présente au niveau de l'alésage une épaisseur maximale de couche de 5 mm, en particulier une épaisseur de maximum 1,5 mm.

10. Procédé d'assemblage selon l'une quelconque des revendications 1 à 9, dans le cadre duquel on applique, avant de réaliser l'alésage dans la première pièce, un matériau d'assemblage à l'endroit devant être percé, le matériau d'assemblage est fondu par l'apport d'énergie du laser, et le laser effectue à travers le matériau d'assemblage fondu l'alésage de la première pièce de sorte que déjà au cours de la réalisation de l'alésage le matériau d'assemblage fondu parvient en traversant l'alésage entre les pièces devant être assemblées.

11. Liaison par assemblage électriquement isolante de deux pièces métalliques et/ou céramiques plates disposées l'une au-dessus de l'autre et à distance l'une de l'autre, à l'aide d'un matériau supplémentaire en céramique de verre utilisé comme agent de liaison pour la liaison par liaison de matière, pouvant être établie selon un procédé selon l'une quelconque des revendications 1 à 10, **caractérisée en ce**
**que** la première pièce présente un alésage traversant dans la zone de la liaison par assemblage, et en ce que le matériau supplémentaire en céramique de verre se trouve uniquement entre les pièces, dans l'alésage et sur la surface opposée à la liaison par assemblage de la première pièce, sachant que la deuxième pièce n'est pas affectée par le rayonnement laser.

12. Liaison par assemblage selon la revendication 11, dans le cadre de laquelle la première pièce présente, à l'endroit de l'alésage, une épaisseur maximale de couche de 5 mm, en particulier une épaisseur de maximum 1,5 mm.

13. Liaison par assemblage selon l'une quelconque des revendications 11 à 12, dans le cadre de laquelle les pièces devant être reliées présentent, dans la zone de la liaison par assemblage, une distance allant de 0,1 à 5 mm, en particulier une distance allant de 0,1 à 2 mm.

14. Liaison par assemblage selon l'une quelconque des revendications 11 à 12, à l'aide d'un alésage traversant dans la zone de la liaison par assemblage dans la première pièce, sachant que l'alésage présente un diamètre compris entre 100 µm et 1500 µm.
